# EUROPEAN PATENT SPECIFICATION

(11) **EP 3 321 231 B1**
(45) Date of publication and mention of the grant of the patent: **01.01.2020**
(21) Application number: 17200979.7
(22) Date of filing: 10.11.2017
(51) Int. Cl.: C01B 35/12, C09K 11/77

(54) **MICROWAVE ASSISTED SYNTHESIS METHOD OF BARIUM ORTHOBORATE HAVING PHOSPHORESCENT PROPERTIES**
MIKROWELLENUNTERSTÜTZTES SYNTHESEVERFAHREN VON BARIUM ORTHOBORATE MIT PHOSPHORESZIERENDEN EIGENSCHAFTEN
PROCÉDÉ DE SYNTHÈSE D'ORTHOBORAT DE BARYUM À PROPRIÉTÉS PHOSPHORESCENTES ASSISTÉE PAR MICRO-ONDES

(30) Priority: 14.11.2016 TR 201616368
(43) Date of publication of application: 16.05.2018
(73) Proprietor: Yilmaz, Aysen, Ankara (TR); Esenturk, Okan, Ankara (TR); Severoglu, Metehan, Ankara (TR)
(72) Inventor: Yilmaz, Aysen, Ankara (TR); Esenturk, Okan, Ankara (TR); Severoglu, Metehan, Ankara (TR)
(74) Representative: Kayahan, Senem

(56) References cited:
- US-A1- 2003 230 740
- CANSIN BADAN ET AL: "Microwave-assisted synthesis of Eu3+ doped lanthanum orthoborates, their characterizations and luminescent properties", SOLID STATE SCIENCES, vol. 14, no. 11-12, 7 August 2012 (2012-08-07), pages 1710-1716, XP055463532, FR ISSN: 1293-2558, DOI: 10.1016/j.solidstatesciences.2012.07.026
- Metehan Severoglu: "MICROWAVE ASSISTED SOLID STATE SYNTHESIS OF RARE EARTH IONS DOPED LaBO3, YBO3 AND GdBO3, THEIR CHARACTERIZATIONS AND INVESTIGATIONS OF LUMINISCENCE PROPERTIES", , 1 June 2016 (2016-06-01), XP055463545, Middle East Technical University Retrieved from the Internet: URL:https://www.google.nl/url?sa=t&rct=j&q =&esrc=s&source=web&cd=2&cad=rja&uact=8&ve d=0ahUKEwjawJPa-o7aAhWEKlAKHZeJC_oQFgg-MAE &url=http%3A%2F%2Fetd.lib.metu.edu.tr%2Fup load%2F12620082%2Findex.pdf&usg=AOvVaw2Z-- dvBIDaLfSRB3VbgAj5 [retrieved on 2018-03-28]
- E. L. BELOKONEVA ET AL: "Structure and nonlinear optical properties of the family of lead and barium nonaborates with a zeolite-like framework", CRYSTALLOGRAPHY REPORTS, vol. 54, no. 5, 1 September 2009 (2009-09-01), pages 814-821, XP055442005, RU ISSN: 1063-7745, DOI: 10.1134/S1063774509050125
- R. C: Roop: "Enyclopedia of the alkaline earth compounds" In: "Enyclopedia of the alkaline earth compounds", 1 January 2012 (2012-01-01), Elsevier, Newnes, XP055463531, ISBN: 978-0-444-59553-9 pages 512-513, * page 512 - page 513 *

## Description

### Technical Field of the Application

The application is related to the synthesis method by means of microwave, of GdBO₃, YBO₃ and Ba₃(BO₃)₂ orthoborate compounds and the doping of these compounds with rare earth element ions such as Ce³⁺, Dy⁺³, Tb³⁺, Sm³⁺, Eu³⁺, Eu²⁺ in order to be used in the LED (Light Emitting Diode) industry.

### Known State of the Art (Prior Art)

In the recent years the need for optical devices has increased. For this reason the luminescent measurement studies carried out in order to define the synthesis and optical characteristics of luminescent phosphorous materials have gained importance. Especially white light emitting luminescent diodes come to mind when optical devices are mentioned and non linear optical materials that are used in laser applications also have a wide scope of usage. Additionally, devices having several different usages such as lasers, scintillators, catalysers, medical carriers that are used to carry out medical diagnosis, energy saving lamps, magneto-optical applications, plasma screens, field emission displays etc., can be counted among such devices. Among all of these, when only diodes that emit white light are examined (white light emitting diodes, w-LEDs) it should be noted that, the materials that are used during production need to have a prolonged emission time, to have a small particle size, to be able to emit the desired color, to be able to provide high energy saving and to be devoid of waste contents that may be harmful to the environment. Fluorescent lamps that are widely used nowadays comprise mercury and are therefore the usage and production thereof is tried to be eliminated due to their potential contamination effects on the environment.

As the materials used for illumination are ceramic materials that have been produced by solid state synthesis method, this has lead to the increase in new studies to be carried out in the LED industry. The solid state lighting compounds in addition to the known LED production technology provides illumination for a prolonged period, and providing net white led lighting by means of a single production and doping step and it increases the possibility to enhance brightness of light. Accordingly generally rare earth element ions (Ce³⁺, Dy⁺³, Tb³⁺, Sm³⁺, Eu³⁺, Eu²⁺ etc) are doped and added as small amounts of mol ratio (%1-15) into host compounds such as silicate, phosphate, molybdate, borate etc as oxide compounds. Methods such as sol-gel, hydrothermal synthesis, high temperature combustion or prolonged heating are used in the production of these types of materials. As long term heating steps are used at high temperatures between 950-1200°C during said synthesis methods, the waiting period during synthesis can extend from 9 hours to 12 hours and even sometimes up to 24 hours. Moreover in several synthesis methods, it is not easy to obtain a pure product as a phase.

The microwave assisted synthesis method subject to the invention within the scope of the characteristics mentioned above, enables to adjust the intensity of emission and to be able to carry out emission with the desired colors as it yields high quality products and as it enables many doping procedures to be carried out in a single synthesis.

In articles of Cansin Badan et al ("Microwave -assisted 1-6, INV. synthesis of Eu3+ doped lanthanum orthoborates, their characterizations luminescent properties", solid state sciences, vol. 14, no. 11-12, pages 1710-1716), Metehan Severoglu et al (Microwave assisted solid state synthesis of rare earth ions doped LaBO3, YbO3 and GdBO3, their characterizations and investigations of luminiscence properties, 2016), E.L. Blokenova et al (Structure and nonlinear optical properties of the family of lead and barium nonaborates with a zeolite-like framework",CRYSTALLOGRAPHY REPORTS, vol. 54, no. 5, 1 September 2009, pages 814-821), and R.C. Roop ("Enyclopedia of the alkaline earth compounds, 2012), microwave assisted synthesis of orthoborates were disclosed.

### Brief Description of the Application and its Objections

In the synthesis method in relation to said application different metal orthoborate compounds (such as MBO₃ or M₃(BO₃)₂, M: earth alkali or rare earth element) and the rare earth element ion doped version of these are prepared in a short period of time and is heated for 10 minutes in a microwave oven, following this, it is heated for 950°C for 2 hours and as a result a powder product having very small particle sizes is obtained.

The heating period at high temperatures have been reduced from 12 hours to 2 hours by means of the microwave assisted synthesis method subject to the invention and furthermore the formation of (unwanted) by-products has been eliminated. When taken into hand economically, as the pure product that does not need purification can be obtained in a short period of time, energy and time is saved. Moreover, the powder products having a very small homogenous particle size obtained as a result of this method provides easy application as they do not necessitate further procedures to be applied during the steps of preparing a slurry solution or during compression.

### Definition of the Figures Describing the Application

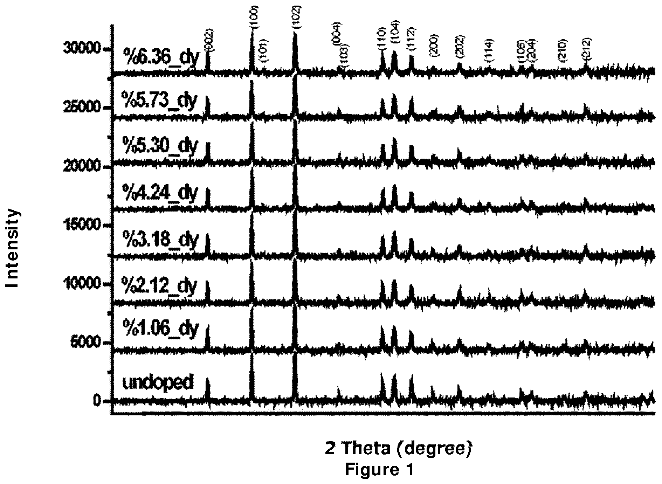

**Fig. 1****:** X-ray pattern for Dy doped GdBO₃.

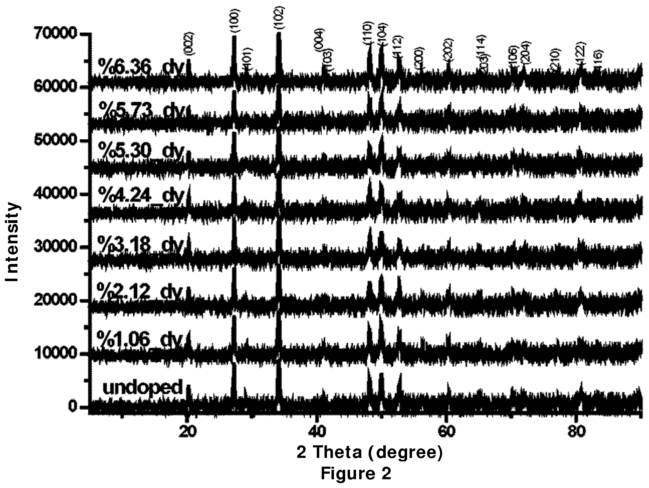

**Fig. 2****:** X-ray pattern for Dy doped YBO₃.

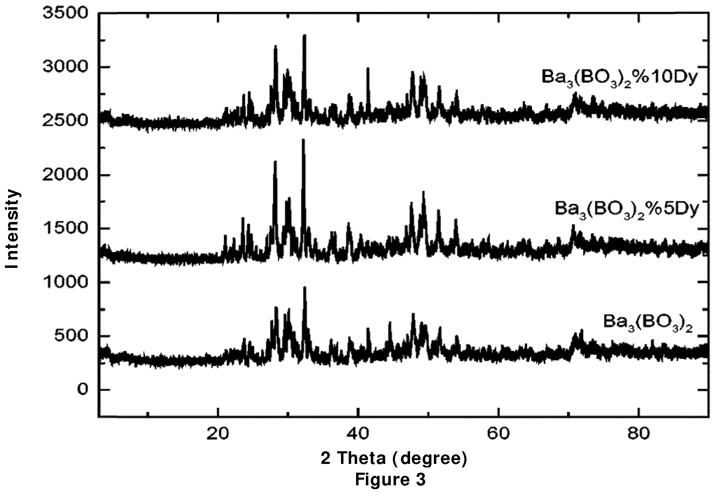

**Fig. 3****:** X-ray pattern for Dy doped Ba₃(BO₃)₂

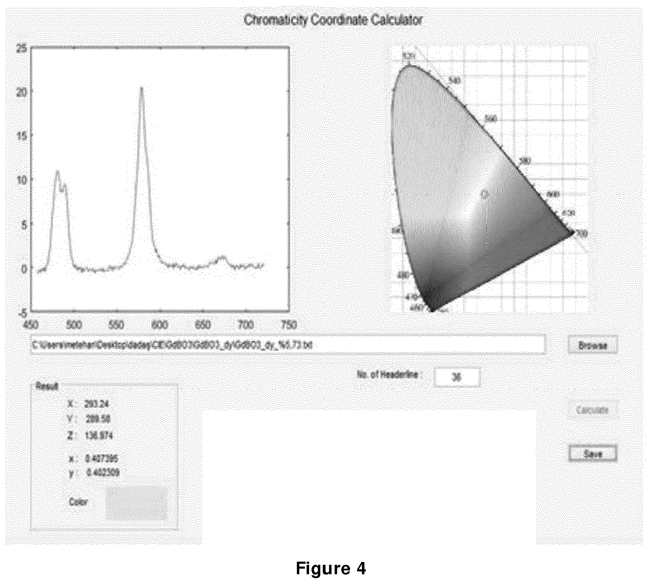

**Fig. 4****:** Luminescent measurement chromacity coordinate calculator values of the GdBO₃_Dy sample.

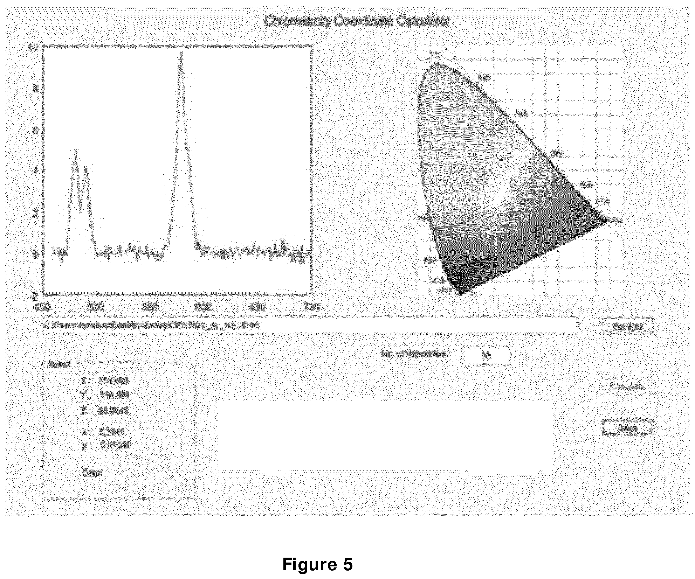

**Fig. 5****:** Luminescent measurement chromacity coordinate calculator values of the YBO₃_Dy sample.

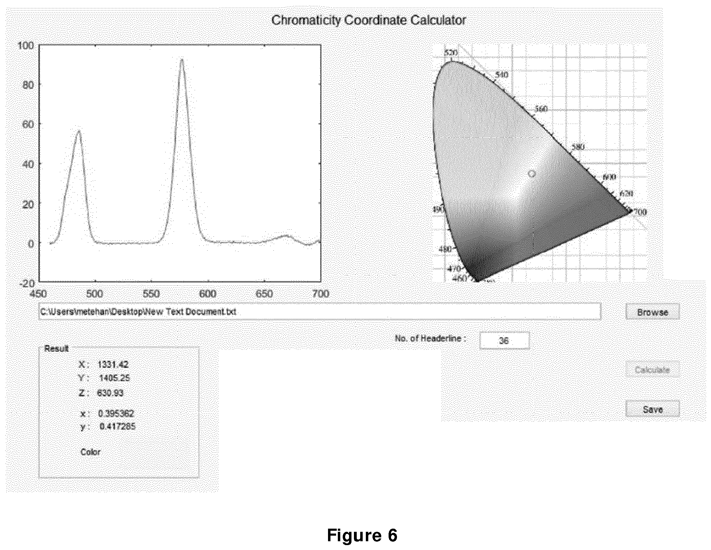

**Fig. 6****:** Luminescent measurement chromacity coordinate calculator values of the Ba₃(BO₃)₂_Dy sample.

### Detailed Description of the Application

The application is related to a method to produce orthoborate compounds. GdBO₃, YBO₃ and Ba₃(BO₃)₂ compounds are produced by means of said invention and following this Dy doping is carried out during and after production. This method basically comprises the following steps:
- The powder materials are mixed in a mortar (agate or ceramic),
- The powder mixture is added into a crucible (preferably ceramic),
- The crucible is heated for 5-20 minutes (preferably 10 minutes) in a kitchen type microwave oven at 1200 W,
- Following this the powder mixture is re-ground in mortar,#
- The reground mixture is heated in an oven at 700-1200°C (preferably at 950°C), for 2 hours and metal orthoborate compound is obtained.

### Production of GdBO₃ and YBO₃

In order to produce GdBO₃ (gadolinium orthoborate); urea (Merck, 99.0%) Gd₂O₃ (gadolinium oxide, Aldrich, 99.9%) and H₃BO₃ (boric acid, Merck, 99.5%) is weighed to obtain Gd₂O₃:urea:H₃BO₃= 1:1.33:2 mol:mol:mol ratios. Following this Gd₂O₃, urea and H₃BO₃ is mixed thoroughly for 5 minutes in an agate mortar. The mixture obtained is placed into a ceramic crucible, it is then heated in a kitchen type microwave oven (1200 W) for 10 minutes and the powder mixture is poured again into agate. Following this, the mixture is heated in an oven at 950°C for 2 hours. After these processes a pure host material is synthesized. In order for rare earth element ions to be doped, the mixing, processing in a microwave oven, grounding and heating procedures at high speed are repeated after the required amount of ion oxide compound is added to the mixture that has been initially prepared.

When the process is started with Y₂O₃ (itrium oxide) instead of Gd₂O₃ during the same method, YBO₃ (itrium orthoborate) is produced. The reactions related to host material productions for GdBO₃ ve YBO₃ is as follows:

Gd₂O₃ + 2 H₃BO₃ → 2GdBO₃ + 3H₂O

Y₂O₃ + 2 H₃BO₃ → 2YBO₃ + 3H₂O

### Production of Ba₃(BO₃)₂

Ba₃(BO₃)₂ (barium orthoborate) synthesis can be carried out with the same method mentioned above. BaCO₃, urea and H₃BO₃ is weighed to have the ratios of BaCO₃:urea:H₃BO₃= 3:1.33:2 mol:mol:mol and the mixture is mixed thoroughly in an agate mortar for 5 minutes. The mixture obtained is placed into a ceramic crucible, it is then heated in a kitchen type microwave oven (1200 W) for 10 minutes and the powder mixture is poured again into agate. Following this, the mixture is heated in an oven at 950°C for 2 hours. After these processes a pure host material is synthesized. In order for rare earth element ions to be doped, the mixing, processing in a microwave oven, grounding and heating procedures at high speed are repeated after the required amount of ion oxide compound is added to the mixture that has been initially prepared. The reaction regarding Ba₃(BO₃)₂ production is as follows:

3BaCO₃ + 2 H₃BO₃ → Ba₃(BO₃)₂ + 3H₂O + CO₂

The materials used in said invention is powder. A= Ba/Gd/Y, B= Urea/glycine/citric acid, C= H₃BO₃, D= Orthoborate, and the general reaction is as mentioned below. The reason for usage of urea from the B group materials is that it provides higher homogenous heating and homogenous particle distribution and as a result it provides higher yield. In order for heating to be observed during heating with a microwave, at least one of the agents that are heated needs to be susceptible to a microwave. Generally the molecules that have higher dipole moment value or a higher dielectric constant are susceptible to a microwave. In the synthesis method used according to the invention, the urea that is added to the starting materials, not only increases susceptibility to a microwave it also surrounds the molecules of the newly developed product as a result of heating, it prevents agglomeration and enables to obtain homogenous, spherical particles having very small radiuses.

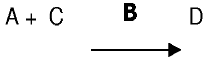

### X-ray measurements:

When all of the X-ray measurements for all starting materials are taken and a comparison is carried out for the newly developed product, a common peak has not been observed and it has been decided that the starting material contamination was not present in the final product. Moreover the powder x-ray pattern of Ba₃(BO₃)₂ which is a newly produced compound has been compared with the x-ray pattern information of all possible barium borate compounds that are present in literature however a common peak was not observed. Therefore there should be no doubt that the obtained product is the anticipated Ba₃(BO₃)₂ compound. Not only could any kind of association be found between possible, known powder x-ray patterns of a barium borate compound but also the possibility of starting materials to remain as contamination was eliminated, however again a common peak was not found.

**COMPARATIVE EXAMPLE 1**

| Materials | Amount Used (g) |
|---|---|
| Gd₂O₃ | 1.88 |
| Urea | 0.415 |
| H₃BO₃ | 0.65 |

**EXAMPLE 2**

| Materials | Amount Used (g) |
|---|---|
| BaCO₃ | 3.058 |
| Urea | 0.415 |
| H₃BO₃ | 0.64 |

### Luminescence measurements:

The products that are obtained are important compounds as they provide potential illumination and emission application possibilities and as they have optical features their photoluminescent measurements have been made. In order to enable easy comparison for each sample, measurements were carried out under the same conditions with solid samples.

The highest intensity and the closest emission to white light has been obtained as a result of doping of the same amount of Dy with a barium orthoborate compound.

## Claims

1. Microwave assisted synthesis method of barium orthoborate (Ba₃(BO₃)₂) **characterized in that** it comprises the following process steps;
- Mixing of barium carbonate (BaCO₃), boric acid (H₃BO₃) and urea that are in powder form in a mortar,
- Placing the power mixture into a crucible,
- Heating the crucible for 5-20 minutes in a kitchen type microwave oven at 1200W,
- Re-grounding the powder mixture again in mortar,
- Obtaining barium orthoborate compounds having homogenous particle sizes by heating the re-ground mixture for 2 hours in an oven at 700-1200°C.

2. A method according to claim 1, **characterized in that** barium carbonate (BaCO₃), boric acid (H₃BO₃) and urea that are all in powder form are mixed in a mortar to have the ratios of 3:1.33:2 mol:mol:mol.

3. A method according to claim 1, **characterized in that** barium carbonate (BaCO₃), boric acid (H₃BO₃) and urea that are all in powder form are mixed in a mortar for 5 minutes.

4. A method according to claim 1, **characterized in that** the mortar is agate or ceramic.

5. A method according to claim 1, **characterized in that** the crucible is made of ceramic.

6. A method according to claim 1, **characterized in that** the crucible is heated for 10 minutes in a kitchen type microwave oven at 1200 W.

7. A method according to claim 1, **characterized in that** the grain mixture that has been re-grounded is cooked in an oven for 2 hours at 950°C.

8. A method according to claim 1 **characterized in that**, it comprises the process step of adding ion oxide compound that is to be doped to the powder mixture formed of a molecule having high dipole and boric acid (H₃BO₃) moment to the metal carbonate or oxide compound that is to be additionally used.

9. A method according to claim 8, **characterized in that** the ion to be doped is a rare earth element.

10. A method according to claim 9, **characterized in that** the ion to be doped is selected from the group of Ce³⁺, Dy⁺³, Tb³⁺, Sm³⁺, Eu³⁺, Eu²⁺ ions.

11. A method according to claim 9, **characterized in that** the ion to be doped is Dy⁺³.

## Patentansprüche

1. Verfahren zur mikrowellenunterstützten Synthese von Bariumorthoborat (Ba₃(BO₃)₂) **dadurch gekennzeichnet, dass** es die folgenden Prozessschritte umfasst;
- Mischen von Bariumcarbonat (BaCO₃), Borsäure (H₃BO₃) und Harnstoff, die in Pulverform in einem Mörtel vorliegen,
- Einbringen der Pulvermischung in einen Tiegel,
- Erwärmen des Tiegels für 5-20 Minuten in einem Küchenmikrowellenherd bei 1200W,
- Nachmahlen der Pulvermischung wieder im Mörtel,
- Erhalten von Bariumorthoboratverbindungen mit homogenen Partikelgrößen durch Erwärmen der nachgemahlenen Mischung für 2 Stunden in einem Herd bei 700-1200°C.

2. Verfahren nach Anspruch 1, **dadurch gekennzeichnet, dass** Bariumcarbonat (BaCO₃), Borsäure (H₃BO₃) und Harnstoff, die alle in Pulverform vorliegen, in einem Mörtel gemischt werden, um die Verhältnisse von 3:1.33:2 mol:mol:mol zu haben.

3. Verfahren nach Anspruch 1, **dadurch gekennzeichnet, dass** Bariumcarbonat (BaCO₃), Borsäure (H₃BO₃) und Harnstoff, die alle in Pulverform vorliegen, in einem Mörtel für 5 Minuten gemischt werden.

4. Verfahren nach Anspruch 1, **dadurch gekennzeichnet, dass** der Mörtel Achat oder Keramik ist.

5. Verfahren nach Anspruch 1, **dadurch gekennzeichnet, dass** der Tiegel aus Keramik besteht.

6. Verfahren nach Anspruch 1, **dadurch gekennzeichnet, dass** der Tiegel in einem Küchenmikrowellenherd für 10 Minuten bei 1200 W erwärmt wird.

7. Verfahren nach Anspruch 1, **dadurch gekennzeichnet, dass** die nachgemahlenen Kornmischung in einem Herd für 2 Stunden bei 950°C gekocht wird.

8. Verfahren nach Anspruch 1, **dadurch gekennzeichnet, dass** es den Verfahrensschritt der Zugabe von Ionenoxidverbindung, die dotiert werden soll, zu der Pulvermischung umfasst, die aus einem Molekül mit hohem Dipol und Borsäure (H₃BO₃)-Moment gebildet wird, zu der Metallcarbonat- oder Oxidverbindung, die zusätzlich verwendet werden soll.

9. Verfahren nach Anspruch 8, **dadurch gekennzeichnet, dass** das zu dotierende Ion ein Seltenerdelement ist.

10. Verfahren nach Anspruch 9, **dadurch gekennzeichnet, dass** das zu dotierende Ion ausgewählt ist aus der Gruppe der Ce³⁺, Dy⁺³, Tb³⁺, Sm³⁺, Eu³⁺, Eu²⁺ Ionen.

11. Verfahren nach Anspruch 9, **dadurch gekennzeichnet, dass** das zu dotierende Ion Dy⁺³ ist.

## Revendications

1. Procédé de synthèse assistée par micro-ondes d'orthoborate de baryum (Ba₃(BO₃)₂) **caractérisé en ce qu'**il comprend les étapes de processus suivantes ;
- Mélanger le carbonate de baryum (BaCO₃), l'acide borique (H₃BO₃) et l'urée en poudre dans un mortier,
- Placer le mélange de poudre dans un creuset,
- Chauffer le creuset pendant 5-20 minutes dans un four à micro-ondes de 1200W de type cuisine,
- Réaffûter de nouveau le mélange de poudre dans le mortier,
- Obtenir les composés d'orthoborate de baryum ayant des tailles de particules homogènes en chauffant le mélange rectifié pendant 2 heures dans un four à 700-1200° C.

2. Procédé selon la revendication 1, **caractérisé en ce que** le carbonate de baryum (BaCO₃), l'acide borique (H₃BO₃) et l'urée qui sont tous sous forme de poudre sont mélangés dans un mortier pour obtenir les rapports 3:1.33:2 mol:mol:mol.

3. Procédé selon la revendication 1, **caractérisé en ce que** le carbonate de baryum (BaCO₃), l'acide borique (H₃BO₃) et l'urée qui sont tous sous forme de poudre sont mélangés dans un mortier pendant 5 minutes.

4. Procédé selon la revendication 1, **caractérisé en ce que** le mortier est en agate ou en céramique.

5. Procédé selon la revendication 1, **caractérisé en ce que** le creuset est en céramique.

6. Procédé selon la revendication 1, **caractérisé en ce que** le creuset est chauffé pendant 10 minutes dans un four à micro-ondes de 1200 W de type cuisine.

7. Procédé selon la revendication 1, **caractérisé en ce que** le mélange de grains qui a été broyé de nouveau est cuit au four pendant 2 heures à 950°C.

8. Procédé selon la revendication 1, **caractérisé en ce que** il comprend l'étape de procédé d'ajouter un composé d'oxyde d'ions qui doit être dopé au mélange de poudre formé d'une molécule ayant un moment dipolaire élevé et d'acide borique (H₃BO₃) au carbonate métallique ou au composé d'oxyde qui doit être utilisé en plus.

9. Procédé selon la revendication 8, **caractérisé en ce que** l'ion à doper est un élément des terres rares.

10. Procédé selon la revendication 9, **caractérisé en ce que** l'ion à doper est choisi dans le groupe des ions Ce³⁺, Dy⁺³, Tb³⁺, Sm³⁺, Eu³⁺, Eu²⁺.

11. Procédé selon la revendication 9, **caractérisé en ce que** l'ion à doper est Dy⁺³.
